# FASCICULE DE BREVET EUROPEEN

(11) **EP 3 600 747 B1**
(45) Date de publication et mention de la délivrance du brevet: **31.03.2021**
(21) Numéro de dépôt: 18709690.4
(22) Date de dépôt: 22.02.2018
(51) Int. Cl.: B23K 9/04, F16L 58/08, F16L 58/18, F16L 13/02

(54) **PROCÉDÉ DE CHEMISAGE D'UNE CONDUITE EN ACIER POUR LE TRANSPORT SOUS-MARIN DE FLUIDES**
VERFAHREN ZUR AUSKLEIDUNG EINES STAHLROHRS FÜR DEN UNTERWASSERTRANSPORT VON FLUIDEN
PROCESS FOR LINING A STEEL PIPE FOR THE SUBSEA TRANSPORT OF FLUIDS

(30) Priorité: 20.03.2017 FR 1752255
(43) Date de publication de la demande: 05.02.2020
(73) Titulaire: SAIPEM S.A., 78180 Montigny-le-Bretonneux (FR)
(72) Inventeur: CARLUCCI, Antonio, 20138 Milano (IT); KERDILES, Eric, 78770 Marcq (FR); PALLADINI, Roberto, 20134 Milano (IT)
(74) Mandataire: Cabinet Beau de Loménie
(86) Numéro de dépôt international: PCT/FR2018/050429
(87) Numéro de publication internationale: WO 2018/172643

(56) Documents cités:
- WO-A1-2008/037907
- WO-A1-2015/087162
- CN-A- 103 008 988
- JP-A- S60 222 682

## Description

### Arrière-plan de l'invention

La présente invention se rapporte au domaine général des conduites de transport de fluides, notamment des conduites sous-marines, reposant au fond de la mer ou assurant la liaison fond-surface pour le transfert d'hydrocarbures, par exemple de pétrole et de gaz, issus de puits de production sous-marins.

L'invention concerne plus précisément un procédé de chemisage de conduites de ce type qui sont réalisées en acier au carbone afin de les revêtir intérieurement d'une couche d'alliage résistant à la corrosion (par exemple en Inconel®).

Certaines conduites sous-marines de transport d'hydrocarbures, et notamment les conduites assurant une liaison fond-surface (appelées « riser » en anglais), sont plaquées intérieurement par une couche d'acier allié ayant typiquement une épaisseur comprise entre 2,5mm et 5mm afin de créer une barrière contre la corrosion et améliorer ainsi les propriétés mécaniques et chimiques de la conduite.

Les conduites plaquées intérieurement par une telle couche d'alliage résistant à la corrosion sont généralement obtenues en liant mécaniquement la couche d'alliage (appelée également chemise) au corps de la conduite. Au niveau de chaque extrémité de la conduite, la couche d'alliage résistant à la corrosion est reliée au corps de la conduite par des cordons de soudure de recouvrement, le métal d'apport étant habituellement à base d'Inconel®.

Plus précisément, les procédés de chemisage connus de l'art antérieur proposent d'introduire en force la couche d'alliage résistant à la corrosion à l'intérieur de la conduite, de déposer un cordon de soudure à chaque extrémité de la conduite pour assurer un maintien aux extrémités de la couche d'alliage, puis d'effectuer un usinage en surface du cordon de soudure au diamètre interne de la conduite.

On connaît ainsi du document WO 2015/087162 un procédé de raccordement de deux éléments de conduite chacun muni d'un chemisage en alliage résistant à la corrosion. Selon cette invention, il est prévu de réaliser un usinage de finition de chaque extrémité de la conduite pour former des chanfreins pour le dépôt d'un cordon de soudure destiné à l'assemblage des éléments de conduite entre eux, puis de retirer par usinage les portions d'extrémité du chemisage de chaque élément de conduite afin d'y déposer par soudage un cordon de soudure de recouvrement. Le cordon de soudure de recouvrement est alors usiné au diamètre interne de la conduite.

On connaît aussi du document WO 2008/037907 A1, un procédé de chemisage d'une conduite en acier pour le transport sous-marin de fluides, comprenant successivement:
(a) l'usinage d'une cavité annulaire dans une paroi interne de la conduite à chemiser,
(b) le dépôt par soudage d'une première couche de rechargement en alliage métallique résistant à la corrosion à l'intérieur de la cavité,
(c) l'usinage en surface de la première couche de rechargement au diamètre interne de la conduite,
(d) l'introduction dans la conduite d'une chemise, la chemise étant introduite de sorte à ce qu'une extrémité de ladite chemise vienne en contact avec la première couche de rechargement usinée.

De tels procédés de chemisage présentent cependant certains inconvénients, notamment en termes de tenue en fatigue de la conduite plaquée ainsi obtenue. En effet, lorsque la conduite est soumise à une fatigue significative, la discontinuité à l'interface entre la chemise en alliage résistant à la corrosion et le cordon de soudure de recouvrement peut initier des fissures qui risquent de se propager à travers l'épaisseur de la conduite jusqu'à provoquer la rupture par fatigue de l'acier qui la constitue.

### Objet et résumé de l'invention

La présente invention a donc pour but principal de pallier de tels inconvénients en proposant d'améliorer la résistance à la fatigue à l'interface entre la chemise en alliage résistant à la corrosion et le cordon de soudure de recouvrement pour l'obtention d'une conduite en acier chemisée.

Conformément à l'invention, ce but est atteint grâce à un procédé de chemisage d'une conduite en acier pour le transport sous-marin de fluides, comprenant successivement :
l'usinage d'une cavité annulaire dans une paroi interne de la conduite à chemiser, ladite cavité étant en retrait longitudinal par rapport à une extrémité de la conduite ;
le dépôt par soudage d'une première couche de rechargement en alliage métallique résistant à la corrosion à l'intérieur de la cavité ;
l'usinage en surface de la première couche de rechargement au diamètre interne de la conduite ;
l'introduction dans la conduite d'une chemise en alliage d'acier résistant à la corrosion, la chemise étant introduite de sorte à ce qu'une extrémité de ladite chemise vienne en contact avec la première couche de rechargement usinée ;
le dépôt par soudage d'au moins une deuxième couche de rechargement en alliage métallique résistant à la corrosion sur la paroi interne de la conduite entre l'extrémité de la chemise en contact avec la première couche de rechargement usinée et l'extrémité correspondante de la conduite ; et
l'usinage en surface de la deuxième couche de rechargement au diamètre interne de la conduite.

Le procédé de chemisage selon l'invention prévoit de déposer une première couche de rechargement sur la paroi interne de la conduite au droit de l'extrémité de la chemise qui est la zone la plus sensible à l'initiation et la propagation de fissure par fatigue. Cette première couche de rechargement ayant des propriétés mécaniques meilleures que celles de la conduite, elle permet ainsi de limiter la fissuration. Il en résulte une amélioration de la résistance à la fatigue de la conduite.

Il a notamment été calculé que pour un exemple d'application typique dans des conditions de plage de contraintes moyennes, le facteur d'amélioration obtenu grâce à la mise en œuvre de l'invention sur l'endurance à la fatigue par rapport à une interface de chemisage de l'art antérieur est compris entre 1,7 et 2, 1, c'est-à-dire que l'amélioration de l'endurance à la fatigue est comprise entre 170% à 200% (voire au-delà) par rapport à l'art antérieur. Une meilleure performance en fatigue permet l'utilisation de conduites chemisées pour des applications dynamiques, ce qui n'est pas le cas avec les conduites chemisées de l'art antérieur.

Par ailleurs, le procédé de chemisage selon l'invention n'engendre aucune problématique pouvant être liée à la soudabilité de la couche de recouvrement et au joint de soudure entre deux conduites. De plus, la mise en œuvre de ce procédé de chemisage ne requiert aucun temps supplémentaire en mer par rapport aux procédés de l'art antérieur.

Selon une disposition avantageuse, la cavité est usinée pour présenter une section droite en forme de trapèze. Dans ce cas, le trapèze présente de préférence une hauteur comprise entre 1 et 5mm, une longueur d'une base comprise entre 10 et 40mm, et deux angles adjacents à la base compris chacun entre 20 et 50°.

Selon une autre disposition avantageuse, le procédé comprend le dépôt de deux deuxièmes couches superposées de rechargement sur la paroi interne de la conduite entre l'extrémité de la chemise en contact avec la première couche de rechargement usinée et l'extrémité correspondante de la conduite.

Le procédé peut comprendre en outre un usinage de finition de l'extrémité de la conduite et de l'extrémité de la deuxième couche de rechargement pour former un chanfrein permettant un assemblage bout à bout avec une autre conduite.

La première couche de rechargement et la deuxième couche de rechargement peuvent être réalisées en Inconel 625®. De même, la conduite peut être réalisée en acier au carbone et présenter une épaisseur comprise entre 8 et 70mm. La chemise peut être introduite en force dans la conduite.

Selon encore une autre disposition, le procédé comprend en outre l'usinage de l'extrémité de la conduite pour en réduire l'épaisseur, le dépôt par soudage d'une troisième couche de rechargement en alliage métallique résistant à la corrosion au niveau de l'extrémité usinée de la conduite, et l'usinage en surface de la troisième couche de rechargement au diamètre interne de la conduite.

L'extrémité de la conduite peut être usinée sur une longueur comprise entre 15 et 20mm et sur une hauteur comprise entre 1 et 5mm. La troisième couche de rechargement peut être réalisée en Inconel 625®.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1A à 1H illustrent différentes étapes d'un exemple de mise en œuvre du procédé selon l'invention ;
- les figures 2A à 2H illustrent différentes étapes d'un autre exemple de mise en œuvre du procédé selon l'invention ; et
- la figure 3 est un graphique montrant l'impact sur l'endurance à la fatigue obtenu par la mise en œuvre du procédé selon l'invention.

### Description détaillée de l'invention

Le procédé selon l'invention s'applique au chemisage de toute conduite en acier destinée au transport de fluides, notamment aux conduites sous-marines, reposant au fond de la mer ou assurant la liaison fond-surface pour le transfert d'hydrocarbures, par exemple de pétrole et de gaz, issus de puits de production sous-marins.

Par chemisage d'une conduite en acier, on entend ici le procédé par lequel on vient revêtir (ou plaquer) l'intérieur de la conduite par une couche d'alliage résistant à la corrosion afin d'améliorer les propriétés mécaniques et chimiques de la conduite.

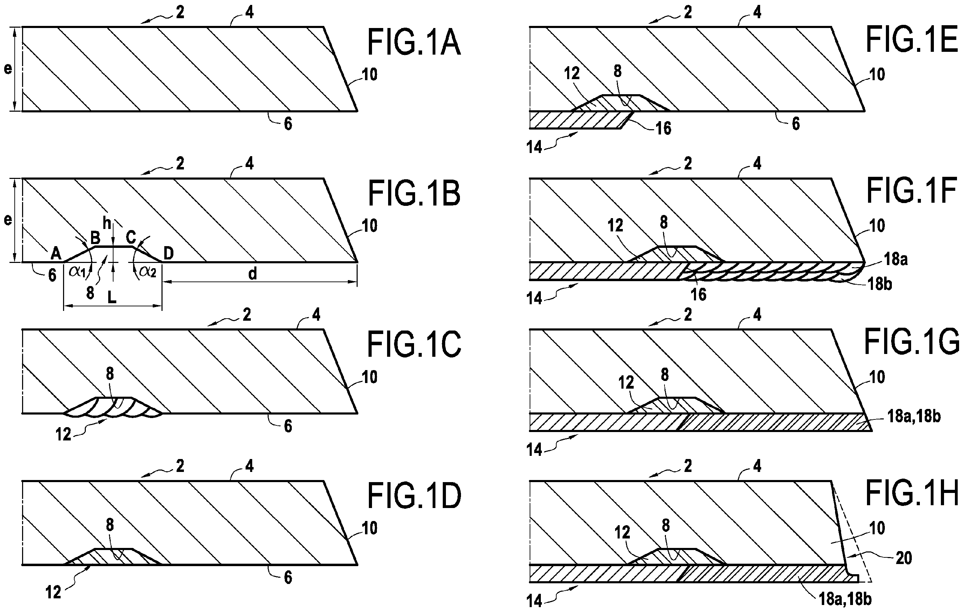

Les figures 1A à 1H illustrent de façon schématique les différentes étapes du procédé de chemisage d'une conduite selon un mode de réalisation de l'invention.

La figure 1A représente une conduite 2 en acier, par exemple en acier au carbone, ayant une épaisseur e délimitée entre sa paroi externe 4 et sa paroi interne 6 comprise typiquement entre 8 et 70mm.

Selon une première étape du procédé illustrée par la figure 1B, il est prévu d'usiner une cavité annulaire 8 dans la paroi interne 6 de la conduite à chemiser 2, cette cavité étant en retrait longitudinal par rapport à l'extrémité 10 de la conduite.

Par « cavité en retrait longitudinal par rapport à l'extrémité de la conduite », on entend ici que cette cavité ne débouche pas au niveau de cette extrémité (elle est décalée longitudinalement par rapport à cette extrémité).

A titre d'exemple, pour une conduite ayant une épaisseur e comprise entre 8 et 70mm, on pourra prévoir que la cavité 8 soit en retrait d'une distance d de 50 à 300mm par rapport à l'extrémité 10 de la conduite.

Selon une disposition avantageuse, la cavité 8 est usinée de sorte à présenter une section droite en forme de trapèze ABCD dont la base [AD] est disposée du côté intérieur de la conduite.

De préférence, pour une conduite ayant une épaisseur e comprise entre 8 et 70mm, un tel trapèze ABCD présente une hauteur h qui est comprise entre 1mm et e/2mm, une longueur L de la base [AD] comprise entre 10 et 40mm, et deux angles adjacents à la base (à savoir les angles α1 et α2 formés respectivement entre [AB] et [AD] et entre [CD] et [DA]) qui sont compris chacun entre 20 et 50°.

En effet, il a été constaté que cette forme particulière de la cavité, avec les dimensions précitées, présentait le dimensionnement optimal pour assurer une bonne compacité des cordons de soudure et ainsi éliminer le risque de défauts qui pourraient avoir un effet nuisible sur la tenue en fatigue.

Selon une deuxième étape du procédé illustrée par la figure 1C, il est prévu de réaliser un dépôt par soudage d'une première couche de rechargement 12 en alliage métallique résistant à la corrosion à l'intérieur de la cavité 8 préalablement usinée.

De préférence, la première couche de rechargement 12 sera réalisée en Inconel 625®, c'est-à-dire en alliage Ni 61 / Cr 22 / Mo 9 / Fe 5. Un tel alliage est particulièrement réputé pour sa grande robustesse et ses propriétés de résistance à la corrosion.

Une fois la première couche de rechargement 12 déposée, il est prévu, au cours d'une étape représentée par la figure 1D, d'usiner en surface de celle-ci au diamètre interne de la conduite. De la sorte, la première couche de rechargement affleure la surface interne de la conduite.

L'étape suivante du procédé consiste à introduire dans la conduite 2 une chemise 14 en alliage d'acier résistant à la corrosion, celle-ci étant introduite de sorte à ce que son extrémité 16 vienne en contact avec la première couche de rechargement 12 (figure 1E).

En d'autres termes, l'extrémité 16 de la chemise 14 vient au droit de la cavité 8 remplie par le dépôt de la première couche de rechargement 12.

A titre d'exemple, la chemise 14 peut être réalisée en alliage d'acier inoxydable, notamment en 316L Inconel 625®, et présenter une épaisseur typiquement comprise entre 2 et 5mm. De façon connue, elle est introduite en force à l'intérieur de la conduite. La longueur de la chemise est calculée de sorte à ce qu'elle soit égale à la distance entre les milieux des deux cavités 8 opposées de la conduite.

Comme représenté sur la figure 1F, l'étape suivante du procédé consiste alors à déposer par soudage au moins une deuxième couche de rechargement en alliage métallique résistant à la corrosion sur la paroi interne 6 de la conduite entre l'extrémité 16 de la chemise 14 (qui est en contact avec la première couche de rechargement 12 usinée) et l'extrémité correspondante 10 de la conduite.

Dans l'exemple représenté sur la figure 1F, compte-tenu de l'épaisseur de la chemise 14 en alliage d'acier résistant à la corrosion (comprise entre 2 et 5mm), il est prévu de déposer sur la paroi interne de la conduite deux deuxièmes couches de rechargement 18a, 18b superposées l'une à l'autre. De préférence, on pourra usiner la première deuxième couche de rechargement 18a déposée afin de minimiser l'initiation de défauts.

La (ou les) deuxième(s) couche(s) de rechargement 18a, 18b est(sont) ensuite usinée(s) au diamètre interne de la conduite au cours d'une étape illustrée par la figure 1G.

Selon une dernière étape représentée par la figure 1H, il peut également être prévu un usinage de finition de l'extrémité 10 de la conduite 2 et de l'extrémité correspondante des deuxièmes couches de rechargement 18a, 18b de façon à former une portion de chanfrein 20 pour le dépôt d'un cordon de soudure destiné à l'assemblage bout à bout de deux conduites.

La conduite en acier au carbone ainsi obtenue est munie d'un revêtement interne formée par une chemise en alliage métallique résistant à la corrosion, cette dernière étant liée à chaque extrémité de la conduite par le (ou les) deuxième(s) couche(s) de rechargement en alliage métallique résistant à la corrosion. Les extrémités 16 de la chemise 14 se trouvent en outre au droit de cavités 8 remplies par des premières couches de rechargement 12 de sorte à limiter la propagation d'une éventuelle fissure.

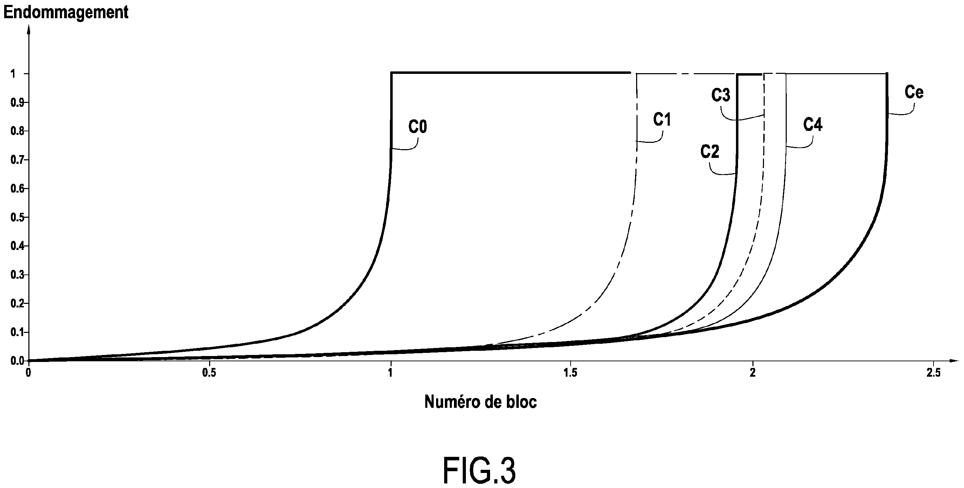

La figure 3 illustre, à titre indicatif, les gains d'amélioration obtenus grâce à la mise en œuvre de l'invention sur l'endurance à la fatigue par rapport à une interface de chemisage de l'art antérieur.

Cette figure 3 montre plusieurs courbes de gain sur l'endurance à la fatigue de conduites en acier au carbone munies d'un revêtement interne formée par une chemise en alliage d'acier résistant à la corrosion par rapport à une conduite chemisée selon l'art antérieur.

Plus précisément, la courbe C0 est obtenue avec une conduite en acier au carbone d'épaisseur de 27,9mm soumise à un chargement cyclique ayant une étendue de contrainte de 100MPa. Cette conduite est revêtue d'une chemise en alliage d'acier résistant à la corrosion selon un procédé de chemisage conforme à l'art antérieur, c'est-à-dire un procédé pour lequel un simple cordon de soudure avec deux couches est déposé à chaque extrémité de la conduite pour assurer un maintien aux extrémités de la chemise. A cette courbe étalon C0 est donc affecté un endommagement égal à 1.

Les courbes C1 à C4 montrent des gains sur l'endurance à la fatigue en termes de numéros de bloc pour différentes épaisseurs de la première couche de rechargement 12 en alliage métallique résistant à la corrosion déposée à l'intérieur de la cavité 8 (l'épaisseur de la première couche de rechargement étant égale à la hauteur h de la cavité 8).

Ainsi, la courbe C1 correspond à une première couche de rechargement 12 ayant une épaisseur de 1mm ; la courbe C2 à une première couche de rechargement ayant une épaisseur de 2mm ; la couche C3 à une première couche de rechargement ayant une épaisseur de 2,5mm ; et la couche C4 à une première couche de rechargement ayant une épaisseur de 3mm. Enfin, la courbe Ce correspond à une première couche de rechargement ayant la même épaisseur que la conduite, à savoir ici 27,9mm.

On constate ainsi que plus la hauteur de la cavité usinée est importante (plus l'épaisseur de la première couche de rechargement l'est également), et plus le gain sur l'endurance à la fatigue augmente. En effet, ce gain passe de 1,7 pour la courbe C1 à 2,1 pour la courbe C4.

Bien entendu, il conviendra d'obtenir le bon compromis pour que cette hauteur de cavité soit suffisamment importante pour obtenir un gain sur l'endurance à la fatigue élevé sans pour autant trop fragiliser la conduite en diminuant trop fortement localement son épaisseur.

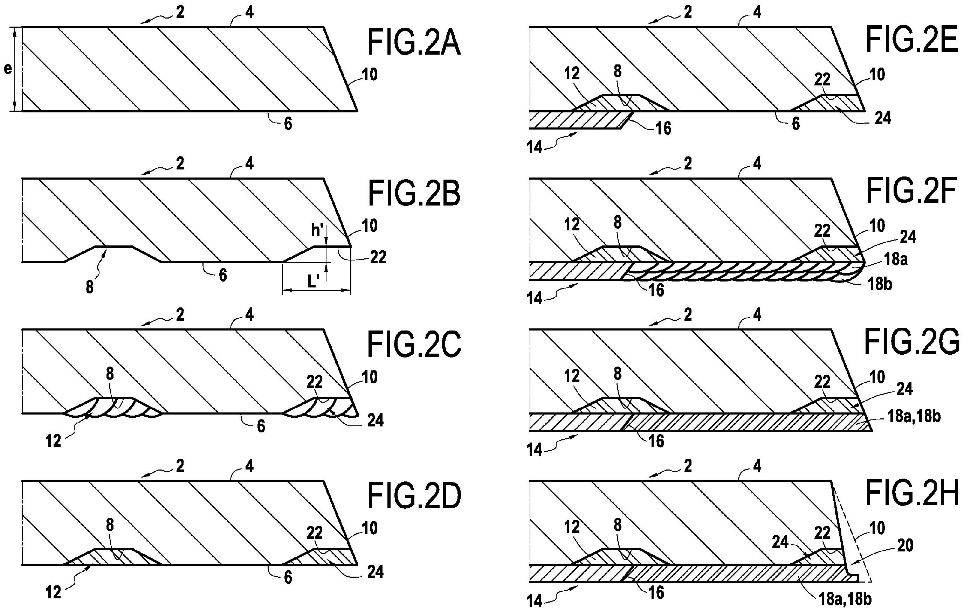

En liaison avec les figures 2A à 2H, on décrira maintenant différentes étapes du procédé de chemisage d'une conduite selon un autre mode de réalisation de l'invention.

Dans cet autre mode de réalisation, l'ensemble des étapes décrites en liaison avec les figures 1A à 1H sont reproduites à l'identique et ne sont donc pas décrites à nouveau ici (les références restent inchangées).

Par rapport au mode de réalisation décrit précédemment, il est également prévu de réaliser un usinage de l'extrémité 10 de la conduite 2 pour en réduire l'épaisseur (figure 2B).

Par exemple, cet usinage consiste en une cavité annulaire ouverte 22 qui présente une section droite ayant la forme d'un demi-trapèze avec une hauteur h' comprise entre 1 et 5mm et une longueur L' comprise entre 15 et 20mm (pour une conduite 2 ayant une épaisseur e comprise entre 8 et 70mm).

Par rapport à la cavité 8 décrite en liaison avec le précédent mode de réalisation, cette cavité ouverte 22 débouche au niveau de l'extrémité 10 de la conduite 2.

Comme représenté sur la figure 2C, une fois la cavité ouverte 10 usinée, il est prévu d'effectuer un dépôt par soudage d'une troisième couche de rechargement 24 en alliage métallique résistant à l'intérieur de la cavité ouverte (c'est-à-dire au niveau de l'extrémité usinée de la conduite).

Comme pour les autres couches de rechargement en alliage métallique résistant, cette troisième couche de rechargement 24 est de préférence réalisée en Inconel 625®.

Au même titre que la première couche de rechargement 12, cette troisième couche de rechargement 24 est alors usinée en surface au diamètre interne de la conduite 2 (figure 2D).

La chemise 14 en alliage d'acier résistant à la corrosion peut ensuite être introduite à l'intérieur de la conduite 2 de sorte à ce que son extrémité 16 vienne en contact avec la première couche de rechargement 12 (figure 2E).

Au moins une deuxième couche de rechargement (et de préférence deux deuxièmes couches de rechargement 18a, 18b) en alliage métallique résistant à la corrosion sont alors déposées par soudage sur la paroi interne 6 de la conduite entre l'extrémité 16 de la chemise 14 et l'extrémité correspondante 10 de la conduite (figure 2F).

Une fois déposées, ces deuxièmes couches de rechargement 18a, 18b sont usinées en surface au diamètre interne de la conduite 2 (figure 2G).

Enfin, il peut être prévu un usinage de finition de l'extrémité 10 de la conduite 2 et de l'extrémité correspondante des deuxièmes couches de rechargement 18a, 18b de façon à former une portion de chanfrein 20 pour le dépôt d'un cordon de soudure destiné à l'assemblage bout à bout de deux conduites (figure 2H).

Par rapport au mode de réalisation décrit en liaison avec les figures 1A à 1H, ce mode de réalisation permet d'empêcher une propagation de fissure initiée dans la zone affectée thermiquement lors du soudage circulaire bout à bout avec une autre conduite. De plus, cela permet d'agrandir les critères d'acceptation pour les défauts initiaux présents dans les soudures circulaires. Enfin, cela permet d'améliorer l'alignement entre les extrémités de deux conduites lors de leur soudage bout à bout.

## Revendications

1. Procédé de chemisage d'une conduite en acier pour le transport sous-marin de fluides, comprenant successivement :
l'usinage d'une cavité annulaire (8) dans une paroi interne (6) de la conduite (2) à chemiser, ladite cavité étant en retrait longitudinal par rapport à une extrémité (10) de la conduite ;
le dépôt par soudage d'une première couche de rechargement (12) en alliage métallique résistant à la corrosion à l'intérieur de la cavité ;
l'usinage en surface de la première couche de rechargement au diamètre interne de la conduite ;
l'introduction dans la conduite d'une chemise (14) en alliage d'acier résistant à la corrosion, la chemise étant introduite de sorte à ce qu'une extrémité (16) de ladite chemise vienne en contact avec la première couche de rechargement (12) usinée ;
le dépôt par soudage d'au moins une deuxième couche de rechargement (18a, 18b) en alliage métallique résistant à la corrosion sur la paroi interne de la conduite entre l'extrémité (16) de la chemise (14) en contact avec la première couche de rechargement (12) usinée et l'extrémité correspondante de la conduite ; et
l'usinage en surface de la deuxième couche de rechargement au diamètre interne de la conduite.

2. Procédé selon la revendication 1, dans lequel la cavité (8) est usinée pour présenter une section droite en forme de trapèze.

3. Procédé selon la revendication 2, dans lequel le trapèze présente une hauteur (h) comprise entre 1 et 5mm, une longueur (L) d'une base ([AD]) comprise entre 10 et 40mm, et deux angles (α1, α2) adjacents à la base compris chacun entre 20 et 50°.

4. Procédé selon l'une quelconque des revendications 1 à 3, comprenant le dépôt de deux deuxièmes couches (18a, 18b) superposées de rechargement sur la paroi interne de la conduite entre l'extrémité de la chemise en contact avec la première couche de rechargement usinée et l'extrémité correspondante de la conduite.

5. Procédé selon l'une quelconque des revendications 1 à 4, comprenant en outre un usinage de finition de l'extrémité de la conduite et de l'extrémité de la deuxième couche de rechargement pour former un chanfrein permettant un assemblage bout à bout avec une autre conduite.

6. Procédé selon l'une quelconque des revendications 1 à 5, dans lequel la première couche de rechargement et la deuxième couche de rechargement sont réalisées en Inconel 625®.

7. Procédé selon l'une quelconque des revendications 1 à 6, dans lequel la conduite est réalisée en acier au carbone et présente une épaisseur (e) comprise entre 8 et 70mm.

8. Procédé selon l'une quelconque des revendications 1 à 7, dans lequel la chemise (14) est introduite en force dans la conduite.

9. Procédé selon l'une quelconque des revendications 1 à 8, comprenant en outre :
l'usinage de l'extrémité de la conduite pour en réduire l'épaisseur ;
le dépôt par soudage d'une troisième couche de rechargement (24) en alliage métallique résistant à la corrosion au niveau de l'extrémité usinée de la conduite ; et
l'usinage en surface de la troisième couche de rechargement au diamètre interne de la conduite.

10. Procédé selon la revendication 9, dans lequel l'extrémité de la conduite est usinée sur une longueur (L') comprise entre 15 et 20mm et sur une hauteur (h'] comprise entre 1 et 5mm.

11. Procédé selon l'une des revendications 9 et 10, dans lequel la troisième couche de rechargement (24) est réalisée en Inconel 625®.

## Patentansprüche

1. Verfahren zur Auskleidung einer Leitung aus Stahl für den unterseeischen Transport von Fluiden, umfassend der Reihe nach:
die maschinelle Einbringung eines ringförmigen Hohlraums (8) in eine Innenwand (6) der auszukleidenden Leitung (2), wobei der Hohlraum in Bezug auf ein Ende (10) der Leitung in Längsrichtung zurückgesetzt ist,
die Aufbringung einer ersten Füllschicht (12) aus einer metallischen Legierung, die korrosionsbeständig ist, durch Schweißung im Inneren des Hohlraums,
die maschinelle Bearbeitung der Oberfläche der ersten Füllschicht auf den Innendurchmesser der Leitung,
die Einbringung einer Auskleidung (14) aus einer korrosionsbeständigen Stahllegierung in die Leitung, wobei die Auskleidung auf solche Art eingebracht wird, dass ein Ende (16) der Auskleidung mit der ersten maschinell bearbeiteten Füllschicht (12) in Kontakt gelangt,
die Aufbringung zumindest einer zweiten Füllschicht (18a, 18b) aus einer metallischen Legierung, die korrosionsbeständig ist, auf der Innenwand der Leitung durch Schweißung zwischen dem Ende (16) der Auskleidung (14) in Kontakt mit der maschinell bearbeiteten ersten Füllschicht (12) und dem entsprechenden Ende der Leitung, und
die maschinelle Bearbeitung der Oberfläche der zweiten Füllschicht auf den Innendurchmesser der Leitung.

2. Verfahren nach Anspruch 1, wobei der Hohlraum (8) so maschinell bearbeitet wird, dass er einen Profilquerschnitt in Trapezform aufweist.

3. Verfahren nach Anspruch 2, wobei das Trapez eine Höhe (h) zwischen 1 und 5 mm, eine Länge (L) einer Basis ([AD]) zwischen 10 und 40 mm und zwei an der Basis anliegende Winkel (α1, α2) jeweils zwischen 20 und 50° aufweist.

4. Verfahren nach einem der Ansprüche 1 bis 3, umfassend die Aufbringung von zwei übereinanderliegenden zweiten Füllschichten (18a, 18b) auf der Innenwand der Leitung zwischen dem Ende der Auskleidung in Kontakt mit der maschinell bearbeiteten ersten Füllschicht und dem entsprechenden Ende der Leitung.

5. Verfahren nach einem der Ansprüche 1 bis 4, umfassend ferner eine maschinelle Endbearbeitung des Endes der Leitung und des Endes der zweiten Füllschicht, um eine Abfasung zu bilden, die einen Zusammenbau Stoß gegen Stoß mit einer weiteren Leitung erlaubt.

6. Verfahren nach einem der Ansprüche 1 bis 5, wobei die erste Füllschicht und die zweite Füllschicht aus Inconel 625® hergestellt werden.

7. Verfahren nach einem der Ansprüche 1 bis 6, wobei die Leitung aus Kohlenstoffstahl hergestellt ist und eine Dicke (e) zwischen 8 und 70 mm aufweist.

8. Verfahren nach einem der Ansprüche 1 bis 7, wobei die Auskleidung (14) in die Leitung eingepresst wird.

9. Verfahren nach einem der Ansprüche 1 bis 8, ferner umfassend:
die maschinelle Bearbeitung des Endes der Leitung, um seine Dicke zu reduzieren,
die Aufbringung einer dritten Füllschicht (24) aus einer metallischen Legierung, die korrosionsbeständig ist, durch Schweißung an dem maschinell bearbeiteten Ende der Leitung, und
die maschinelle Bearbeitung der Oberfläche der dritten Füllschicht auf den Innendurchmesser der Leitung.

10. Verfahren nach Anspruch 9, wobei das Ende der Leitung auf einer Länge (L`) zwischen 15 und 20 mm und auf einer Höhe (h') zwischen 1 und 5 mm maschinell bearbeitet wird.

11. Verfahren nach einem der Ansprüche 9 und 10, wobei die dritte Füllschicht (24) aus Inconel 625® hergestellt wird.

## Claims

1. Process for lining a steel pipe for the subsea transport of fluids, comprising successively:
the machining of an annular cavity (8) in an inner wall (6) of the pipe (2) to be lined, said cavity being set back longitudinally relative to an end (10) of the pipe;
the deposition by welding of a first resurfacing layer (12) made of a corrosion-resistant metal alloy on the inside of the cavity;
the surface machining of the first resurfacing layer to the internal diameter of the pipe;
the introduction into the pipe of a liner (14) made of corrosion-resistant steel alloy, the liner being introduced so that one end (16) of said liner comes into contact with the first machined resurfacing layer (12);
the deposition by welding of at least one second resurfacing layer (18a, 18b) made of corrosion-resistant metal alloy on the inner wall of the pipe between the end (16) of the liner (14) in contact with the first machined resurfacing layer (12) and the corresponding end of the pipe; and
the surface machining of the second resurfacing layer to the internal diameter of the pipe.

2. Process according to claim 1, wherein the cavity (8) is machined to have a trapezoidal cross-section.

3. Process according to claim 2, wherein the trapezoid has a height (h) between 1 and 5mm, a length (L) of a base ([AD]) between 10 and 40mm, and two angles (α1, α2) adjacent to the base each between 20 and 50°.

4. Process according to any one of claims 1 to 3, comprising the deposition of two second superposed resurfacing layers (18a, 18b) on the inner wall of the pipe between the end of the liner in contact with the first machined resurfacing layer and the corresponding end of the pipe.

5. Process according to any one of claims 1 to 4, further comprising a finishing machining of the end of the pipe and of the end of the second resurfacing layer to form a bevel allowing butt-joining with another pipe.

6. Process according to any one of claims 1 to 5, wherein the first resurfacing layer and the second resurfacing layer are made of Inconel 625®.

7. Process according to any one of claims 1 to 6, wherein the pipe is made of carbon steel and has a thickness (e) between 8 and 70mm.

8. Process according to any one of claims 1 to 7, wherein the liner (14) is forced into the pipe.

9. Process according to any one of claims 1 to 8, further comprising:
the machining of the end of the pipe to reduce its thickness;
the deposition by welding of a third resurfacing layer (24) made of corrosion-resistant metal alloy at the machined end of the pipe; and
the surface machining of the third resurfacing layer to the internal diameter of the pipe.

10. Process according to claim 9, wherein the end of the pipe is machined to a length (L') between 15 and 20mm and a height (h') between 1 and 5mm.

11. Process according to one of claims 9 and 10, wherein the third resurfacing layer (24) is made of Inconel 625®.
